(19) Europäisches Patentamt
European Patent Office
Office européen des brevets

(11) **EP 3 918 923 A1**

(12) **EUROPEAN PATENT APPLICATION**
published in accordance with Art. 153(4) EPC

(43) Date of publication:
**08.12.2021 Bulletin 2021/49**

(51) Int Cl.:
***A23L 11/00*** *(2021.01)*          ***A23L 33/22*** *(2016.01)*

(21) Application number: **20918973.7**

(86) International application number:
**PCT/JP2020/030827**

(22) Date of filing: **13.08.2020**

(87) International publication number:
**WO 2021/161558 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.02.2020 JP 2020022293**

(71) Applicant: **Mizkan Holdings Co., Ltd.**
**Handa-shi, Aichi 475-8585 (JP)**

(72) Inventors:
• **YAMORI, Yuka**
**Handa-shi, Aichi 475-8585 (JP)**
• **KATSUKI, Mao**
**Handa-shi, Aichi 475-8585 (JP)**

(74) Representative: **Mewburn Ellis LLP**
**Aurora Building**
**Counterslip**
**Bristol BS1 6BX (GB)**

(54) **IMMATURE BEAN-CONTAINING POWDER MAINTAINING COLOR TONE, FOOD AND BEVERAGE, AND METHOD FOR PRODUCING SAME**

(57)     A dry powder comprising an edible part and an inedible part of immature pulses and satisfying following requirements (1) to (8):
(1) a proportion of the inedible part to the edible part of immature pulses is from 1 mass% to 200 mass% by dry mass;
(2) a moisture content is 20 mass% or less;
(3) brightness in a Munsell color system is 7 or more;
(4) chroma in a Munsell color system is 3 or more;
(5) hue in a Munsell color system is from 5Y to 10Y or from 0GY to 10GY;
(6) a specific surface area per unit volume of dry powder particles before ultrasonication is 0.05 m$^2$/mL or more as measured with a laser diffraction particle size analyzer using ethanol as a solvent;
(7) a standard deviation of particle size distribution of dry powder particles before ultrasonication is 200 $\mu$m or less as measured with a laser diffraction particle size analyzer using ethanol as a solvent; and
(8) a number average diameter of dry powder particles after ultrasonication is less than 30 $\mu$m as measured with a laser diffraction particle size analyzer using ethanol as a solvent.

**Description**

Technical Field

The present invention relates to a powder containing immature pulse having a retained color tone, a food/drink, and a method for producing the same.

Background Art

Many methods have been proposed for preventing fading of green color or for restoring faded green color, such as in vegetables containing chlorophyll. However, so far, the prevention of fading of green color has yet been put to practical use except for the method using metal ions or coloring agents.
As the prevention of fading of green color, Patent Literature 1 discloses a method of immersing green vegetables and seaweeds in an aqueous solution containing a copper chlorophyll or a copper chlorophyllin alkali metal salt, and a reducing agent to color green, and Patent Literature 2 discloses a technique of placing an aqueous solution containing a trace amount of an organic acid in a copper container and heating it at 60°C or higher for a certain time, and mixing a green plant and a zinc ion therein, thereby effectively preventing fading color of a green plant.

Citations

Patent Literatures

[Patent Literature 1] JP hei 6-217732-A
[Patent Literature 2] JP 2011-239761-A

Summary of the Invention

Problem

However, the technologies described in Patent Literatures 1 and 2 require additional copper ions externally, which is not preferable from the viewpoint of health to the human body. In addition, since they need a step of exposing vegetables containing chlorophyll to copper ions, they have issues to be settled in terms of productivity.
The present invention aims to provide a dry powder of a green edible plant capable of preventing fading of its green color over a long period of time, a food/drink using the same and a method for producing the same.

Solution to Problem

As a result of energetic studies under the above circumstances, the present inventors newly found that the above issues can be simultaneously and easily solved by focusing on the effects of the edible part and the non-edible part of the green edible plant taken together, which are not available conventionally. Then, the present inventors completed the following inventions by further energetic research based on the above findings.
The present invention provides the following [1] to [8].

[1] A dry powder comprising an edible part and an inedible part of immature pulses and satisfying following requirements (1) to (8):

(1) a proportion of the inedible part to the edible part of immature pulses is from 1 mass% to 200 mass% by dry mass;
(2) a moisture content is 20 mass% or less;
(3) brightness in a Munsell color system is 7 or more;
(4) chroma in a Munsell color system is 3 or more;
(5) hue in a Munsell color system is from 5Y to 10Y or from 0GY to 10GY;
(6) a specific surface area per unit volume of dry powder particles before ultrasonication is 0.05 m$^2$/mL or more as measured with a laser diffraction particle size analyzer using ethanol as a solvent;
(7) a standard deviation of particle size distribution of dry powder particles before ultrasonication is 200 μm or less as measured with a laser diffraction particle size analyzer using ethanol as a solvent; and

(8) a number average diameter of dry powder particles after ultrasonication is less than 30 $\mu$m as measured with a laser diffraction particle size analyzer using ethanol as a solvent.

[2] The dry powder according to [1], comprising insoluble dietary fibers in an amount of 3 mass% or more by dry mass.

[3] The dry powder according to [1] or [2], comprising the immature pulses in an amount of 20 mass% or more by dry mass.

[4] The dry powder according to any one of [1] to [3], wherein the immature pulses are one or more pulses selected from the group consisting of Pisum, Phaseolus, Glycine, and Vicia.

[5] The dry powder according to any one of [1] to [4], which is free of a colorant.

[6] A food/drink comprising the dry powder according to any one of [1] to [5].

[7] A method for producing the dry powder according to any one of [1] to [5], the method comprising crushing dry immature pulses that meet the conditions (1) to (5) of [1] until the conditions (6) to (8) of [1] are met.

Advantageous Effect of the Invention

The present invention provides a dry powder of a green edible plant capable of preventing fading of its green color over a long period of time, a food/drink using the same, and a method for producing the same.

Brief Description of the Drawing

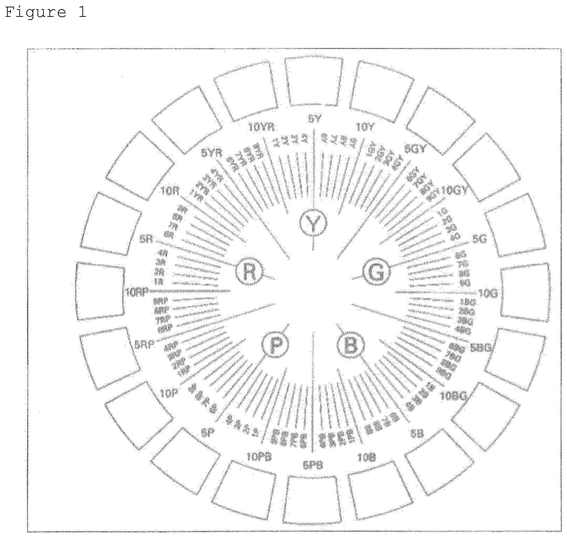

Fig. 1 shows a hue circle in accordance with Munsell color system (JISZ8721).

Description of Embodiments

Embodiments of the present invention are exemplified below, but the present invention is not limited to these embodiments, and can be implemented with any modifications without departing from the spirit thereof.

The present invention relates to a dry powder that meets at least any one of various characteristics described hereafter and contains an edible part and an inedible part of immature pulses (dry powder of the present invention).

The immature pulses in the present invention are pulse seeds harvested in an immature state with pods and the beans and pods of the immature pulses are in green color tones.

The pulses in the present invention are not limited in any way and are typically pulses that are eaten or drunk by human, i.e., preferably pulses for food.

Examples of the pulses include, but not limited to, green bean, kidney bean, red kidney bean, white kidney bean, black turtle bean, pinto bean, tiger bean, lima bean, runner bean, peas (e.g., yellow pea, white pea, green pea, and blue pea, in particular, green pea, which is immature seeds harvested in an immature state with pods and are characterized by the green appearance), pigeon pea, mung bean, cowpea, azuki bean, broad bean, soybean (in particular, green soybeans, which are immature seeds harvested in an immature state with pods and are characterized by the green appearance), chickpea, lentil, hiramame (Lens culinaris), lentil, peanut, lupinus bean, grasspea, carob, Petai, Nere, coffee bean, cacao bean, and Mexican jumping bean.

For a foodstuff of which a partial edible part is regarded as a vegetable (e.g., green soybean or green pea) in the classification described in "the Standard Tables of Food Composition in Japan, 2015, (Seventh Revised Version) Supplement, 2018" (see the Food composition tables provided by the Ministry of Health, Labor and Welfare, in particular, Table 1 on page 236), it also can be determined whether it is pulses or not based on the state of the whole plant (e.g., soybean or pea) including the inedible part (such as pods).

The type of the immature pulses of the present invention is not limited, but among the above-mentioned examples of the pulses, it is preferable to use one or more selected from the group consisting of, for example, pulses of the Pisum, Phaseolus, Glycine, and Vicia, in view of a high frequency in the habit of ingesting the edible part and the inedible part in an immature state. Specifically, examples of these pulses include, but not limited to, peas (in particular, yellow pea, white pea, and immature green pea seeds), green bean, broad bean, and soybean (in particular, green soybean, which is immature seeds of soybean harvested in an immature state with pods, and the bean (edible part) has a green appearance). These immature pulses may be used directly or may be used after various treatments (for example, drying, heating, harshness removal, peeling, seed removal, ripening, salting, and pericarp processing). In the present invention, it is particularly preferable to use immature pulses of which the edible parts have green appearances, specifically, for example, pea (the edible part of which is immature seeds, i.e., green pea), green bean, broad bean, and soybean (in particular, green soybean, which is immature seeds of soybean harvested in an immature state with pods, and the bean (edible part) has a green appearance).

In the present invention, the term "inedible part" of immature pulses refers to a part of immature pulses that is usually unsuitable for eating or drinking and is discarded in normal dietary habits, and the term "edible part" refers to a part obtained by removing the disposal part (inedible part) from the whole immature pulses. In particular, immature pulses including an inedible part have poor suitability for eating and compatibility with other foodstuffs and have not been used for eating and have been discarded a lot. In contrast, the present invention can suitably use such inedible parts.

The edible part and/or the inedible part of immature pulses used in the dry powder of the present invention may be derived from a single type of immature pulses or may be an arbitrary combination of those derived from multiple types of immature pulses. When the dry powder of the present invention contains both an edible part and an inedible part of immature pulses, these edible part and inedible part may be derived from different types of immature pulses, respectively; however, it is preferable that the edible part and the inedible part be derived from the same type of immature pulses. That is, it is possible to eat the nourishment of immature pulses without waste by using a part or the whole of the edible part and a part or the whole of the inedible part derived from the same type of immature pulses.

The site and the proportion of the inedible part in the immature pulses used in the present invention can be naturally understood by those skilled in the art who handle the food or processed products of the food. For example, the "removed portion" and the "refuse" described in the Standard Tables of Food Composition in Japan, 2015, (Seventh Revised Version) can be referred to (An examples is shown in Table 1) and used as the site and the proportion of the inedible part, respectively. Based on the site and the proportion of the inedible part in a foodstuff, the site and the proportion of the edible part can also be understood.

[Table 1]

| Edible plant | Site of inedible part (disposal part) | Proportion of inedible part (wastage rate) |
| --- | --- | --- |
| Vegetables/ green soybean/ raw | Pod | 45% |
| Vegetables/ (peas)/ green pea/ raw | Pod | 55% |
| Vegetables/ broad bean/ immature pulse/ raw | Seed coat, pod | 80% |
| Vegetables/ green bean/ green pod/ raw | String and both ends | 3% |

The dry powder in the present invention contains an edible part and an inedible part of immature pulses. The proportion of the inedible part to the edible part of the immature pulses, regarding the lower limit, may be 1 mass% or more by dry mass in view of the effects of the present invention and, in particular, preferably 3 mass% or more, further preferably 10 mass% or more, and more preferably 20 mass% or more. On the other hand, regarding the upper limit, the proportion is preferably 200 mass% or less by dry mass in view of causing influence of unfavorable flavor, such as acrid taste, derived from the inedible part, in particular, preferably 150 mass% or less, and further preferably 100 mass% or less. It is also preferable that an edible part having specific brightness, chroma, and hue described later be contained in the above-mentioned proportion because the effects of the present invention are more significantly exhibited. In addition, it is preferable in view of exhibiting the effects of the invention to contain an inedible part, which is a target of color tone retention and has specific brightness, chroma, and hue described later, in the above-mentioned proportion. Even if an edible part and an inedible part of immature pulses have brightness, chroma, and hue that have changed from those immediately after the harvesting due to thermal load and so on associated with processing, they can be used.

In the present invention, the term "by dry mass" refers to a value in terms of mass when water content is 0 mass%.

The dry powder of the present invention may be prepared by using, as all or a part thereof, an edible part and an inedible part of immature pulses subjected to drying and crushing. As the drying method, an arbitrary method that is generally used in drying of foods can be used. Examples thereof include sun drying, shade drying, air drying (e.g., hot air drying, fluidized bed drying method, spray drying, drum drying, and low temperature drying), pressure drying, vacuum drying, microwave drying, and oil heat drying. In particular, a method including air drying (e.g., hot air drying, fluidized bed drying method, spray drying, drum drying, or low temperature drying) is preferable in view of a small degree of change in color tone or flavor inherent in the immature pulses and relatively easily controlling the non-food aroma (e.g., burnt odor).

In the dry powder of the present invention, the method of crushing for pulverization is not particularly limited. The temperature at crushing is not limited either, and any one of high-temperature crushing, ordinary-temperature crushing, and low-temperature crushing may be performed. The pressure at crushing is not limited either, and any of high-pressure crushing, ordinary-pressure crushing, and low-pressure crushing may be performed. Examples of the apparatus for such crushing include equipment, such as a blender, a mixer, a mill, a kneader, a grinder, a crusher, and an attritor, and any of these apparatuses may be used. As such an apparatus, a medium stirring mill, such as a dry bead mill and a ball mill (a rolling type, a vibration type, etc.), a jet mill, a high-speed rotary impact type mill (e.g., pin mill), a roll mill, or a hammer mill can be used, for example.

The "dry" state of a dry powder in the present invention refers to a state in which the moisture content is 20 mass% or less. In addition, the water activity value is usually 0.95 or less.

In the present specification, the term "moisture content" means the proportion of the total amount of the amount of moisture derived from the raw material of the dry powder and the amount of moisture separately added with respect to the total amount of the solid content (that is, moisture content on dry basis). The value thereof is measured by a drying method involving heating at 90°C and reduced pressure in accordance with the Standard Tables of Food Composition in Japan, 2015, (Seventh Revised Version). Specifically, an appropriate amount ($W_1$) of a sample is placed in a scale container ($W_0$) previously adjusted to a constant weight. At ordinary pressure, the scale container with the lid removed or the aperture open is put in an electric dryer for constant temperature and reduced pressure, the dryer adjusted to a predetermined temperature (more specifically 90°C). The door is closed, the vacuum pump is operated, and drying is performed at a predetermined degree of reduced pressure for a predetermined period of time. The vacuum pump is stopped, dry air is sent to return the pressure to ordinary pressure, the scale container is taken out, the lid is put on the container, and after allowing to cool in a desiccator, the mass is weighed. The drying, cooling, and mass weighing are repeated until a constant weight ($W_2$) is obtained. The moisture content (mass%) is determined by the following calculation equation.

$$\texttt{Moisture (g/100 g) = } (W_1 - W_2)/(W_2 - W_0) \times 100$$

$W_0$: mass (g) of the scale container adjusted to constant weight,
$W_1$: mass (g) of the scale container containing a sample before drying, and
$W_2$: mass (g) of the scale container containing the sample after drying.

In the brightness prescribed in the Munsell color system (JIS Z8721), ideal black with a reflectance of 0 is defined as a value of 0, and ideal white with a perfect reflection is defined as a value of 10. The brightness of the dry powder of the present invention is preferably 7 or more and further preferably 8 or more. The upper limit is not particularly prescribed, but the brightness is preferably less than 10, further preferably 9.5 or less, and further preferably 9 or less. When the brightness prescribed in the Munsell color system (JIS Z8721) is within a specific range, an ingredient in the edible part has an influence on the inedible part, which is one factor of exhibiting the effect of maintaining the green color tone of the present invention. For the immature pulses that are used as a raw material of the dry powder of the present invention, it is preferable that the brightness be within the above-mentioned range.

When the chroma prescribed in the Munsell color system is within a specific range in addition to the brightness prescribed in the Munsell color system within a specific range, an ingredient in the edible part has an influence on the inedible part, which is one factor of more strongly exhibiting the effect of maintaining the color tone. The chroma of the dry powder of the present invention is preferably 3 or more and further preferably 4 or more. The upper limit is not particularly prescribed, but the chroma is preferably 12 or less, further preferably 11 or less, more preferably 10 or less, more preferably 9 or less, more preferably 8 or less, more preferably 7 or less, and further preferably 6 or less. For the immature pulses that are used as a raw material of the dry powder of the present invention, it is preferable that the chroma be within the above-mentioned range, in addition to the brightness within a specific range.

When the hue prescribed in the Munsell color system is within a specific range in addition to the brightness and the chroma prescribed in the Munsell color system within respective specific ranges, an ingredient in the edible part has an influence on the inedible part, which is one factor of more significantly exhibiting the effect of maintaining the color tone. The hue of the dry powder of the present invention is preferably 5Y to 10Y (0GY) or 0GY to 10GY and more preferably 5Y to 10Y (0GY) or 0GY to 5GY. The reason for this is as follows: when the hue of the dry powder of the present invention is on the counterclockwise side (R direction side) with respect to 5Y in the Munsell hue circle (Fig. 1), an ingredient of the edible part cannot have a sufficient influence on the inedible part, and such a hue is therefore not preferable; and when the hue is on the clockwise side (G direction side) with respect to 10GY (more preferably 5GY), the color deviates from natural green of vegetables, and such a hue is therefore not preferable. For the immature pulses to be used as a raw material of the dry powder of the present invention, the hue prescribed in the Munsell color system is also preferably within the above-mentioned range in addition to the brightness and the chroma within respective specific ranges. In addition, it is preferable to perform the crushing such immature pulses as a raw material. As a result, such immature pulses in a powder form are contained in a dry powder, which is preferable because the effects of the present invention are exhibited.

That is, in a dry powder of immature pulses, it is inferred that although the inedible part such as bean pods is severely faded, a useful ingredient that is presumed to be contained in the bean, which is the edible part, has the effect of preventing fading. When the brightness, chroma, and hue prescribed in the Munsell color system (JIS Z8721) of the dry powder of the present invention are within respective specific ranges, an ingredient in the edible part has an influence on the inedible part, which is one factor of exhibiting the effect of maintaining the color tone. Accordingly, for the dry powder of immature pulses, it is preferable to use an edible part having specific brightness, chroma, and hue described later because the effects of the present invention are more significantly exhibited. It is also preferable to use an inedible part, which is a target of color tone retention and has specific brightness, chroma, and hue described later. Even if an edible part and an inedible part of immature pulses have brightness, chroma, and hue that have changed from those immediately after the harvesting due to thermal load and so on associated with processing, they can be used.

In the Munsell hue circle (Fig. 1) of the Munsell color system, hues includes ten basic hues composed of the primary five hues, R, Y, G, B, and P, and also the respective intermediates thereof, YR, GY, BG, PB, and RP, the ten hues are arranged circularly in a clockwise direction as a reference, each of the intervals is further divided into 10 parts at equal rates, and the scale is set to display, for example, as 1Y to 10Y to express the whole hue. When the range of hue is described in the present invention, the range is the clockwise range in the table shown in Fig. 1 unless otherwise specified. The boundary between main hues, for example, the boundary between Y and GY can be expressed as from 10Y or 0GY. For example, from 0Y to 10Y or from 0GY to 10GY represent a range of hues continuously changing as from 0Y to 10Y (or 0GY) to 10GY (see Fig. 1).

In the edible part of the immature pulses of the present invention, the brightness prescribed in the Munsell color system (JIS Z8721) is preferably 4 or more and further preferably 5 or more. The upper limit thereof is not particularly prescribed, but the brightness is preferably 10 or less and more preferably 9 or less. Furthermore, the chroma is preferably 2 or more and further preferably 3 or more. The upper limit thereof is not particularly prescribed, but the chrom is preferably 12 or less, further preferably 11 or less, and more preferably 10 or less. Furthermore, in the Munsell hue circle (Fig. 1), the hue is preferably from 5Y to 10Y or from 0GY to 10GY and more preferably from 0Y to 5GY. The reason for this is as follows: when the hue is on the counterclockwise side (R direction side) with respect to 5Y, an ingredient of the edible part cannot have a sufficient influence on the inedible part, and such a hue is therefore not preferable; and when the hue is on the clockwise side (G direction side) with respect to 10GY (0G), the color deviates from natural green of vegetables, and such a hue is therefore not preferable. In other words, it is further preferable that the edible part of immature pulses have the brightness, chroma, and hue prescribed in the Munsell color system (JIS Z8721) within respective specific ranges (in particular, showing a green appearance), because an ingredient in the edible part has an influence on the inedible part to more highly exhibit the effect of maintaining the color tone of the present invention. In addition, it is preferable to perform the crushing using the edible part of immature pulses as a raw material. As a result, the edible part of immature pulses in a powder form is contained in a dry powder, which is preferable because the effects of the present invention are exhibited.

At the same time, the brightness prescribed in the Munsell color system (JIS Z8721) of the inedible part of immature pulses of the present invention is preferably 5 or more and further preferably 6 or more. The upper limit of the brightness is not particularly prescribed, but the brightness is preferably 10 or less, and more preferably 9 or less. The chroma is preferably 3 or more and further preferably 4 or more. The upper limit of the chroma is not particularly prescribed, but the chroma is preferably 12 or less, further preferably 11 or less, and more preferably 10 or less. In the Munsell hue circle (Fig. 1), the hue is preferably from 5Y to 10Y or from 0GY to 10GY and more preferably from 0Y to 5GY. The reason for this is as follows: when the hue is on the counterclockwise side (R direction side) with respect to 5Y, an ingredient of the edible part cannot have a sufficient influence on the inedible part, and such a hue is therefore not preferable; and when the hue is on the clockwise side (G direction side) with respect to 10GY (0G), the color deviates from natural green of vegetables, and such a hue is therefore not preferable. That is, when the brightness, chroma, and hue prescribed in the Munsell color system (JIS Z8721) of the inedible part of immature pulses are within respective specific ranges (in particular, showing a green appearance), an ingredient in the edible part has an influence on the inedible part, and the effect of maintaining the color tone is more preferably exhibited. In particular, the inedible part further preferably has a green appearance, because the color is improved when mixed with an edible part of immature pulses. In addition, it is preferable to perform the crushing by using the inedible part of immature pulses as a raw material. As a result, the inedible part of immature pulses in a powder form is contained in a dry powder, which is preferable because the effects of the present invention are exhibited.

In a dry powder containing an edible part and an inedible part of immature pulses of the present invention, the specific surface area per unit volume of the dry powder particles before ultrasonication is adjusted within a specific range, which is one factor of exhibiting the effects of the present invention.

Specifically, the specific surface area per unit volume of dry powder particles before ultrasonication, as measured with a laser diffraction particle size analyzer using ethanol as a solvent, may be 0.05 $m^2$/mL or more, in particular, preferably 0.06 $m^2$/mL or more, further preferably 0.07 $m^2$/mL or more, further preferably 0.10 $m^2$/mL or more, further preferably 0.15 $m^2$/mL or more, further preferably 0.20 $m^2$/mL or more, further preferably 0.25 $m^2$/mL or more, further preferably 0.30 $m^2$/mL or more, and particularly preferably 0.40 $m^2$/mL or more.

The upper limit is not particularly prescribed, but the specific surface area is preferably adjusted to 5.00 $m^2$/mL or less, in particular, preferably 4.00 $m^2$/mL or less and further preferably 3.00 $m^2$/mL or less, in view of industrial convenience.

In the present invention, the term "specific surface area per unit volume ($m^2$/mL)" represents a specific surface area per unit volume (1 mL) as measured with a laser diffraction particle size analyzer described later on the assumption that the particles are spherical. The specific surface area per unit volume on the assumption that the particles are spherical is a numerical value based on a measurement mechanism different from that for a measured value reflecting the particle component, surface structure, etc. (specific surface area per volume or per mass determined by, for example, a permeation method or a gas adsorption method). The specific surface area per unit volume on the assumption that particles are spherical can be determined by $6 \times \Sigma (a_i)/\Sigma (a_i \cdot d_i)$, where $a_i$ represents the surface area of one particle, and $d_i$ represents the particle diameter.

In a dry powder containing an edible part and an inedible part of immature pulses of the present invention, the standard deviation of particle size distribution of the dry powder particles before ultrasonication is adjusted within a specific range measured with a laser diffraction particle size analyzer using ethanol as a solvent, which is one factor of more strongly exhibiting the effects of the present invention.

Specifically, the standard deviation of particle size distribution of the dry powder particles before ultrasonication may be 200 $\mu$m or less, in particular, preferably 170 $\mu$m or less, further preferably 150 $\mu$m or less, further preferably 130 $\mu$m or less, and particularly preferably 100 $\mu$m or less, as measured with a laser diffraction particle size analyzer using ethanol as a solvent. The lower limit of the standard deviation is not particularly prescribed, but the standard deviation is preferably adjusted to 5 $\mu$m or more, in view of industrial convenience. The inedible part (in particular, the pod part) of immature pulses has a very high hardness compared to the edible part; thus, when crushing is aimlessly performed, the crushed material of the inedible part has a large particle diameter, and the crushed material of the edible part has a small particle diameter. Accordingly, the standard deviation of the particle size distribution before ultrasonication is usually above 200 $\mu$m.

Furthermore, in a dry powder containing an edible part and an inedible part of immature pulses of the present invention, the number average diameter of the dry powder particles after ultrasonication is adjusted within a specific range as measured with a laser diffraction particle size analyzer using ethanol as a solvent, which is one factor of more significantly exhibiting the effects of the present invention.

Specifically, the number average diameter of the dry powder particles after ultrasonication may be less than 30 $\mu$m as measured with a laser diffraction particle size analyzer using ethanol as a solvent, in particular, preferably 25 $\mu$m or less, further preferably 20 $\mu$m or less, further preferably 15 $\mu$m or less, and particularly preferably 10 $\mu$m or less. The lower limit is not particularly prescribed, but the number average diameter is preferably adjusted to 0.1 $\mu$m or more in view of industrial convenience.

The "number average diameter" in the present invention is an average diameter determined from a virtual number distribution that is obtained through calculation on the assumption that all particles in the dry powder of the present invention are spherical, and is calculated by $\Sigma(v/d^2)/\Sigma(v/d^3)$ (d: representative value of each particle size channel, v: percentage by volume of each channel), and the numerical value thereof is largely different from the volume-based average diameter.

The conditions for measurement of the specific surface area per unit volume before ultrasonication, the standard deviation, and the number average diameter after ultrasonication of the particles in the dry powder of the present invention above-mentioned are not limited, but can be, for example, the following conditions. First, as the solvent at measurement, ethanol is used in order to prescribe the characteristics after the shape change when water is added to the dry powder of the present invention. The laser diffraction particle size analyzer that is used for measurement is not limited, and, for example, Microtrac MT3300 EXII system by MicrotracBEL Corporation can be used. The measurement application software is not limited, and, for example, DMS2 (Data Management System version 2, by MicrotracBEL Corporation) can be used. When the above-mentioned analyzer and software are used, the measurement may be performed by pressing down the washing button of the software to implement washing, then pressing down the SetZero button of the software to implement zero adjustment, and directly charging a sample by sample loading until the concentration of the sample falls within an appropriate range. For measurement on a sample after ultrasonication, a sample subjected to ultrasonication in advance may be placed, or a sample may be placed and then subjected to ultrasonication using the analyzer before measurement. When ultrasonication is performed, a sample not subjected to ultrasonication is placed, the concentration is adjusted within an appropriate range by sample loading, and the ultrasonication button of the software is then pressed down to perform ultrasonication. Subsequently, defoaming is performed three times, and then sample loading treatment is performed again. Immediately after verification that the concentration is still within the appropriate range, laser diffraction is performed at a flow rate of 60% for a measurement time of 10 seconds, and the result can be used as the measured value. The "ultrasonication" in the present invention is treatment of applying ultrasonic waves of a frequency of 40 kHz to a measurement sample at an output of 40 W for 3 minutes, unless otherwise specified. The parameters at measurement can be, for example, distribution display: volume, particle refractive index: 1.60, solvent refractive index: 1.36 (ethanol solvent), upper limit of measurement ($\mu$m) = 2,000.00 $\mu$m, and lower limit of measurement ($\mu$m) = 0.021 $\mu$m.

In the determination of the specific surface area per unit volume of the particles in the dry powder of the present invention before ultrasonication, the standard deviation, and the number average diameter after ultrasonication, the determination is preferably performed by measuring the particle size distribution at each channel (CH) and then using the particle diameter for each measurement channel shown in Table 2 below as the standard. Specifically, the particle frequency in % of each channel (which is also referred to as "particle frequency in % for XX channel") can be determined by measuring the frequency of particles that are not larger than the particle diameter prescribed for each channel shown in Table 2 below and larger than the particle diameter (in the channel largest in the measurement range, measurement lower limit of particle diameter) prescribed for the channel of a larger number by one for each channel shown in Table 2 below and using the total frequency of all channels within the measurement range as the denominator. For example, the particle frequency in % of channel 1 represents the frequency in % of particles that are not larger than 2,000.00 $\mu$m and larger than 1,826.00 $\mu$m.

[Table 2]

| Channel | Particle diameter ($\mu$m) | Channel | Particle diameter ($\mu$m) | Channel | Particle diameter ($\mu$m) | Channel | Particle diameter ($\mu$m) |
|---|---|---|---|---|---|---|---|
| 1 | 2000.00 | 37 | 88.000 | 73 | 3.889 | 109 | 0.172 |
| 2 | 1826.00 | 38 | 80.700 | 74 | 3.566 | 110 | 0.158 |
| 3 | 1674.00 | 39 | 74.000 | 75 | 3.270 | 111 | 0.145 |
| 4 | 1535.00 | 40 | 67.860 | 76 | 2.999 | 112 | 0.133 |
| 5 | 1408.00 | 41 | 62.230 | 77 | 2.750 | 113 | 0.122 |
| 6 | 1291.00 | 42 | 57.060 | 78 | 2.522 | 114 | 0.111 |
| 7 | 1184.00 | 43 | 52.330 | 79 | 2.312 | 115 | 0.102 |
| 8 | 1086.00 | 44 | 47.980 | 80 | 2.121 | 116 | 0.094 |
| 9 | 995.60 | 45 | 44.000 | 81 | 1.945 | 117 | 0.086 |
| 10 | 913.00 | 46 | 40.350 | 82 | 1.783 | 118 | 0.079 |
| 11 | 837.20 | 47 | 37.000 | 83 | 1.635 | 119 | 0.072 |
| 12 | 767.70 | 48 | 33.930 | 84 | 1.499 | 120 | 0.066 |
| 13 | 704.00 | 49 | 31.110 | 85 | 1.375 | 121 | 0.061 |
| 14 | 645.60 | 50 | 28.530 | 86 | 1.261 | 122 | 0.056 |
| 15 | 592.00 | 51 | 26.160 | 87 | 1.156 | 123 | 0.051 |
| 16 | 542.90 | 52 | 23.990 | 88 | 1.060 | 124 | 0.047 |
| 17 | 497.80 | 53 | 22.000 | 89 | 0.972 | 125 | 0.043 |
| 18 | 456.50 | 54 | 20.170 | 90 | 0.892 | 126 | 0.039 |
| 19 | 418.60 | 55 | 18.500 | 91 | 0.818 | 127 | 0.036 |
| 20 | 383.90 | 56 | 16.960 | 92 | 0.750 | 128 | 0.033 |
| 21 | 352.00 | 57 | 15.560 | 93 | 0.688 | 129 | 0.030 |
| 22 | 322.80 | 58 | 14.270 | 94 | 0.630 | 130 | 0.028 |
| 23 | 296.00 | 59 | 13.080 | 95 | 0.578 | 131 | 0.026 |
| 24 | 271.40 | 60 | 12.000 | 96 | 0.530 | 132 | 0.023 |
| 25 | 248.90 | 61 | 11.000 | 97 | 0.486 | | |
| 26 | 228.20 | 62 | 10.090 | 98 | 0.446 | | |
| 27 | 209.30 | 63 | 9.250 | 99 | 0.409 | | |
| 28 | 191.90 | 64 | 8.482 | 100 | 0.375 | | |
| 29 | 176.00 | 65 | 7.778 | 101 | 0.344 | | |
| 30 | 161.40 | 66 | 7.133 | 102 | 0.315 | | |
| 31 | 148.00 | 67 | 6.541 | 103 | 0.289 | | |

(continued)

| Channel | Particle diameter ($\mu$m) | Channel | Particle diameter ($\mu$m) | Channel | Particle diameter ($\mu$m) | Channel | Particle diameter ($\mu$m) |
|---|---|---|---|---|---|---|---|
| 32 | 135.70 | 68 | 5.998 | 104 | 0.265 | | |
| 33 | 124.50 | 69 | 5.500 | 105 | 0.243 | | |
| 34 | 114.10 | 70 | 5.044 | 106 | 0.223 | | |
| 35 | 104.70 | 71 | 4.625 | 107 | 0.204 | | |
| 36 | 95.96 | 72 | 4.241 | 108 | 0.187 | | |

The dry powder of the present invention preferably contains insoluble dietary fibers because the effects of the present invention are more strongly exhibited. The type of the insoluble dietary fibers is not limited, but the insoluble dietary fibers may be derived from one type of immature pulses or may be derived from two or more types of immature pulses.

In the dry powder of the present invention, the content of the insoluble dietary fibers is preferably within a specific range. Specifically, the content of the insoluble dietary fibers is preferably 3.0 mass% or more by dry mass and further preferably 4.0 mass% or more, 5.0 mass% or more, 6.0 mass% or more, 7.0 mass% or more, 8.0 mass% or more, 9.0 mass% or more, 10.0 mass% or more, 15.0 mass% or more, or 20.0 mass% or more. When the content of the insoluble dietary fibers is lower than the above-mentioned lower limit, the effects of the present invention may not be sufficiently exhibited. On the other hand, the upper limit of the content of the insoluble dietary fibers in the dry powder of the present invention is not particularly limited, but the content is preferably 70 mass% or less by dry mass, in particular, preferably 60 mass% or less, further preferably 50 mass% or less, and particularly preferably 40 mass% or less. When the content of the insoluble dietary fibers is higher than the above-mentioned upper limit, the texture of the dry powder may be deteriorated.

In the present invention, the content of the insoluble dietary fibers in a dry powder is measured by a modified Prosky method in accordance with the Standard Tables of Food Composition in Japan, 2015, (Seventh Revised Version).

In the dry powder of the present invention, the amount of the immature pulses is preferably a specific amount or more. Specifically, the amount of the immature pulses contained in the dry powder is preferably 20 mass% or more by dry mass, in particular, preferably 50 mass% or more, further preferably 70 mass% or more, and particularly preferably 90 mass% or more, and it is particularly desirable to be substantially 100 mass%. When the amount of the immature pulses is lower than the above-mentioned lower limit, the effects of the present invention may not be sufficiently exhibited.

The proportion of the dry powder of the immature pulses having the above-mentioned specific brightness, chroma, and hue to the total dry powder is more preferably the above-mentioned proportion, because the effects of the present invention are significantly exhibited. Even if the dry powder of immature pulses has brightness, chroma, and hue that have changed from those immediately after the harvesting due to thermal load and so on associated with processing, it can be used.

Further, the dry powder of the present invention is preferably free of a colorant in view of developing the natural green color inherent in the immature pulses.

The present invention also encompasses a food/drink containing the dry powder of the present invention. In a food/drink containing the dry powder, the color tone of the food/drink can be maintained and improved by the effects of the dry powder of the present invention. The amount of the dry powder of the present invention contained in the food/drink is not particularly limited and may be appropriately adjusted such that the color tone of the dry powder can be imparted to the food/drink. The proportion of the dry powder to the total amount of the food/drink is preferably 10 mass% or more by dry mass and more preferably 20 mass% or more, more preferably 30 mass% or more, and particularly preferably 40 mass% or more. Regarding the upper limit, the proportion is preferably 100 mass% or less.

The dry powder of the present invention may contain another foodstuff as long as it does not interfere with the function and effect of the present invention. Specifically, such a foodstuff is a foodstuff or ingredient larger than 2,000 $\mu$m (2 mm), which is not the target of laser diffraction particle size distribution measurement. Examples of such an additional foodstuff include, but not limited to, grain puffs, dried nuts, and dried fruits, and any thereof may be used. These foodstuffs may be used singly or in an arbitrary combination of two or more thereof.

In such a case, the measurement of the specific surface area per unit volume of the particles in the dry powder before ultrasonication, the standard deviation, and the number average diameter after ultrasonication in the state after ultrasonication is performed after removing these foodstuff and ingredient having a diameter of 2,000.00 $\mu$m or more, which is the measurement upper limit.

Examples of the food/drink containing the dry powder of the present invention include, but not limited to, liquid, semi-solid, or solid food/drink such as seasonings (e.g., mayonnaise, dressing, butter, and margarine), semi-solid or solid foods such as confectioneries (e.g., granola, sticks, crackers, caramel, gummies, and chips), and food/drink such as dry seasonings.

Furthermore, the present invention also encompasses a method for producing the above-described dry powder of the present invention (the production method of the present invention). The production method of the present invention includes crushing dry immature pulses of which the characteristics, such as the proportion of the inedible part to the edible part of immature pulses, the moisture content, and brightness, chroma, and hue in the Munsell color system of each of the edible part and the inedible part, satisfy the above-described prescriptions until that the particle characteristics, such as the specific surface area per unit volume before ultrasonication, the standard deviation of the particle size distribution before ultrasonication, and the number average diameter after ultrasonication, satisfy the above-described prescription. The details of the material composition, characteristics, physical properties, crushing conditions, and so on are as described above. In particular, it is preferable to use an edible part having green appearance of immature pulses as a raw material and crush the edible part together with an inedible part until the above-described prescription is satisfied, because an ingredient in the refined edible part of immature pulses has an influence on the inedible part to exhibit higher effects. It is further preferable to use an inedible part having green appearance of immature pulses, and it is more preferable to use an edible part and an inedible part both having green appearance of immature pulses as raw materials and to crush them until the above-described prescription is satisfied.

Since unpleasant odor is generated from the inedible part of immature pulses immediately after harvesting, it is preferable to include a step of inactivating an enzyme within 24 hours of harvesting of the inedible part, because a dry edible plant composition with a good smell can be obtained. The inactivated state of an enzyme refers to a state in which the enzyme activity (e.g., amylase activity) of an edible plant is reduced to less than 20% of that at harvesting.

Examples of the method for inactivation include deactivation treatment, such as steaming or boiling treatment, and inactivation treatment, such as freezing treatment and drying treatment. When inactivation treatment is performed, the inactivated state is preferably maintained until immediately before crushing. The inactivated state may be achieved in a foodstuff as such (for example, a foodstuff is subjected to freezing treatment within 24 hours of harvesting), or the inactivated state may be achieved by making a dry edible plant composition within 24 hours of harvesting. In addition to the inedible part, it is preferable to inactivate an enzyme also in the edible part within 24 hours.

It is preferable to inactivate enzymes by freezing within 24 hours of harvesting, because cells are broken during drying to accelerate the drying. In particular, such treatment is useful for an edible plant containing insoluble dietary fibers in an amount of 20 mass% or more by dry mass. Cutting before drying is further preferably performed in a semi-thawed state, because dripping of moisture is prevented.

Examples

The present invention will now be described in more detail with reference to Examples, but these Examples are illustrative only for convenience of description, and the present invention is not limited to these Examples in any sense.

As shown in Table 3, dried products of soybean (green soybean), pea (green pea), green bean, and broad bean (in each of the dried products, the moisture content was less than 20 mass%) were used as immature pulses and were directly impact-crushed with a hammer mill until the measured values of particle characteristics shown in the Table were obtained to produce dry powders (the particle diameter, d90, of the particles in the dry powder was less than 200 μm when ultrasonication was performed with an ethanol solvent).

In addition, as an example of food/drink containing a dry powder, sticks were produced by the following production process from dry powders prepared in Test Examples and Comparative Examples in the Table and were subject to sensory inspection as in the dry powders. The sticks were each obtained by mixing a dry powder prepared above with water in an amount of 30 mass% to prepare a dough composition, then drying the composition at 80°C for 1 hour, and cooling it.

The measurement items in the Table were measured under the suitable conditions described in detail above. Subsequently, these dry powders and food/drink were placed in a light-shielded and sealed container and were subjected to a preservation test in an atmosphere of 40°C for 1 month (after storage). The degree of fading of the green color of the sample was observed and compared between before and after the preservation test (before storage; keeping in a sealed container in an atmosphere of 5°C) to perform sensory inspection for the following comprehensive evaluation.

The evaluation criteria are as follows.

<Evaluation criteria: comprehensive evaluation>

5: Preferable, because there is no change in the green color tone between the sticks before and after the storage;

4: Slightly preferable, because the change in the green color tone between the sticks before and after the storage is slight;

3: There is a change in the green color tone between the sticks before and after the storage, which is acceptable;

2: Slightly unfavorable, because there is a slightly noticeable change in the green color tone between the sticks before and after the storage; and

1: Unfavorable, because there is a noticeable change in the green color tone between the sticks before and after the storage.

The sensory inspectors were chosen from inspectors who had been trained for the following discrimination tests A) to C) and showed particularly excellent results, had experience in product development and a wealth of knowledge about the quality of foods, such as taste and texture, and were capable of performing absolute evaluation on each sensory inspection item.

A) Taste quality discrimination test of correctly discriminating samples for five tastes (sweetness: taste of sugar, sourness: taste of tartaric acid, savoriness: taste of sodium glutamate, saltiness: taste of sodium chloride, and bitterness: taste of caffeine) from five aqueous solution samples prepared so as to have respective concentrations close to the threshold of these components, and two samples of distilled water, seven samples in total;

B) Concentration difference discrimination test of correctly discriminating concentration differences in five sodium chloride aqueous solutions and five acetic acid aqueous solutions having concentrations slightly different from each other; and

C) Triangle discrimination test of correctly discriminating a soy sauce of maker B from two soy sauces of maker A and the soy sauce of maker B, three samples in total.

In each of the evaluation items, all the inspectors evaluated standard samples in advance, and each score of the evaluation criteria was standardized. The sensory inspection was then performed with objectivity by 10 inspectors. The evaluation of the each item was made by selecting a rating closest to the inspector's own evaluation in five-grade scale of each item. The total result of the evaluation was calculated from the arithmetic mean values of the scores by 10 inspectors and was rounded off to the nearest whole number.

The results are shown in Table 3.

[Table 3]

| | Immature pulses | Proportion of immature pulses (mass%) | Sodium chloride (mass%) | Proportion of inedible part to edible part of dry immature pulses (mass%) | (Edible part)/(edible part + inedible part) of dry immature pulses (mass ratio) | (Inedible part)/(edible part + inedible part) of dry immature pulses (mass ratio) | Before storage (edible part + inedible part of immature pulses) | | | After storage (edible part + inedible part of immature pulses) | | | Specific surface area per unit volume of dry powder particles of immature pulses before ultrasonication (m²/mL) | Standard deviation of particle size distribution of dry powder particles of immature pulses before ultrasonication (μm) | Number average diameter of dry powder particles of immature pulses after ultrasonication (μm) | Insoluble dietary fibers (g/100g) | Moisture content (g/100g) | Comprehensive evaluation |
|---|---|---|---|---|---|---|---|---|---|---|---|---|---|---|---|---|---|---|
| | | | | | | | Munsell color system brightness | Munsell color system chroma | Munsell color system hue | Munsell color system brightness | Munsell color system chroma | Munsell color system hue | | | | | | |
| CE 1 | Soybean (green soybean) | 100% | 0% | 300 | 25.0% | 75.0% | 8 | 6 | 5GY | 9 | 4 | 2.5Y | 0.16 | 83.25 | 5.64 | 52.5 | 12 | 2 |
| TE 1 | Soybean (green soybean) | 100% | 0% | 200 | 33.3% | 66.7% | 8 | 6 | 5GY | 8 | 4 | 5Y | 0.07 | 161.34 | 10.40 | 39.9 | 10 | 4 |
| TE 2 | Soybean (green soybean) | 100% | 0% | 160 | 38.5% | 61.5% | 8 | 6 | 5GY | 8 | 4 | 10Y | 0.32 | 98.78 | 2.68 | 38.0 | 10 | 5 |
| TE 3 | Soybean (green soybean) | 100% | 0% | 120 | 45.5% | 54.5% | 8 | 6 | 5GY | 8 | 5 | 10Y | 0.23 | 55.60 | 15.30 | 35.4 | 5 | 5 |
| TE 4 | Soybean (green soybean) | 100% | 0% | 80 | 55.6% | 44.4% | 8 | 6 | 5GY | 8 | 5 | 5GY | 0.97 | 60.40 | 10.40 | 31.6 | 4 | 5 |
| TE 5 | Soybean (green soybean) | 100% | 0% | 40 | 71.4% | 28.6% | 8 | 6 | 5GY | 8 | 5.5 | 5GY | 0.18 | 78.10 | 21.40 | 25.6 | 1 | 5 |

| | | | | | | | | | | | | | | | | | |
|---|---|---|---|---|---|---|---|---|---|---|---|---|---|---|---|---|---|
| TE 6 | Soybean (green soybean) | 100% | 0% | 20 | 83.3% | 16.7% | 8 | 6 | 5GY | 8 | 5.5 | 5GY | 0.54 | 77.10 | 26.50 | 21.1 | 5 | 5 |
| TE 7 | Soybean (green soybean) | 100% | 0% | 10 | 90.9% | 9.1% | 8 | 6 | 5GY | 8 | 4 | 10GY | 0.79 | 45.60 | 28.30 | 18.2 | 6 | 5 |
| TE 8 | Soybean (green soybean) | 100% | 0% | 5 | 95.2% | 4.8% | 8 | 6 | 5GY | 8 | 4.5 | 10GY | 0.85 | 34.56 | 3.26 | 16.6 | 8 | 5 |
| TE 9 | Soybean (green soybean) | 100% | 0% | 1 | 99.0% | 1.0% | 8 | 6 | 5GY | 8 | 4.5 | 10GY | 0.98 | 9.74 | 1.94 | 15.2 | 5 | 5 |
| CE 2 | Soybean (green soybean) | 100% | 0% | Unknown because it was a commercial product | Unknown because it was a commercial product | Unknown because it was a commercial product | 8 | 6 | 5GY | 9 | 4 | 2.5Y | 0.04 | 206.64 | 33.55 | 34.8 | 12 | 1 |
| CE 3 | Soybean (green soybean) | 100% | 0% | 110 | 47.6% | 52.4% | 8 | 6 | 5GY | 9 | 4 | 3Y | 0.04 | 299.00 | 21.21 | 34.5 | 13 | 1 |
| TE 10 | Pea (green pea) | 100% | 0% | 85 | 54.1% | 45.9% | 9 | 5 | 5GY | 9 | 5 | 5GY | 0.33 | 59.83 | 2.75 | 21.4 | 15 | 5 |
| CE 4 | Pea (green pea) | 100% | 0% | 270 | 27.0% | 73.0% | 9 | 5 | 5GY | 9 | 4.5 | 2.5Y | 0.13 | 100.55 | 8.24 | 32.5 | 10 | 2 |
| TE 11 | Green bean | 100% | 0% | 6 | 94.3% | 5.7% | 9 | 5 | 10Y | 9 | 4 | 10Y | 0.24 | 124.05 | 2.53 | 16.2 | 13 | 5 |
| CE 5 | Green bean | 100% | 0% | 250 | 28.6% | 71.4% | 9 | 5 | 10Y | 9 | 4 | 2.5Y | 0.13 | 132.54 | 6.67 | 27.5 | 13 | 2 |
| TE 12 | Broad bean | 100% | 0% | 35 | 74.1% | 25.9% | 9 | 5 | 10Y | 9 | 4 | 10Y | 0.11 | 139.66 | 9.79 | 24.5 | 10 | 5 |
| CE 6 | Broad bean | 100% | 0% | 230 | 30.3% | 69.7% | 9 | 5 | 10Y | 9 | 4 | 2.5Y | 0.18 | 174.53 | 2.83 | 31.2 | 10 | 2 |
| TE 13 | Soybean (green soybean) | 90% | 10% | 10 | 90.9% | 9.1% | 8 | 6 | 5GY | 8 | 5 | 5GY | 0.97 | 60.40 | 10.40 | 16.4 | 18 | 5 |
| TE 14 | Soybean (green soybean) | 80% | 20% | 10 | 90.9% | 9.1% | 8 | 6 | 5GY | 8 | 5 | 5GY | 0.97 | 60.40 | 10.40 | 14.6 | 18 | 5 |
| TE 15 | Soybean (green soybean) | 70% | 30% | 10 | 90.9% | 9.1% | 8 | 6 | 5GY | 8 | 5 | 5GY | 0.97 | 60.40 | 10.40 | 12.8 | 10 | 5 |
| TE 16 | Soybean (green soybean) | 60% | 40% | 10 | 90.9% | 9.1% | 8 | 6 | 5GY | 8 | 5 | 5GY | 0.97 | 60.40 | 10.40 | 10.9 | 10 | 5 |
| TE 17 | Soybean (green soybean) | 50% | 50% | 10 | 90.9% | 9.1% | 8 | 6 | 5GY | 8 | 5 | 5GY | 0.97 | 60.40 | 10.40 | 9.1 | 7 | 5 |
| TE 18 | Soybean (green soybean) | 40% | 60% | 10 | 90.9% | 9.1% | 8 | 6 | 5GY | 8 | 5 | 5GY | 0.97 | 60.40 | 10.40 | 7.3 | 7 | 5 |
| TE 19 | Soybean (green soybean) | 30% | 70% | 10 | 90.9% | 9.1% | 8 | 6 | 5GY | 8 | 5 | 5GY | 0.97 | 60.40 | 10.40 | 5.5 | 7 | 4 |
| TE 20 | Soybean (green soybean) | 20% | 80% | 10 | 90.9% | 9.1% | 8 | 6 | 5GY | 8 | 5 | 5GY | 0.97 | 60.40 | 10.40 | 3.6 | 6 | 3 |
| CE 7 | Soybean (green soybean) | 50% | 50% | 10 | 90.9% | 9.1% | 8 | 6 | 5GY | 8 | 5 | 5GY | 0.11 | 225.63 | 7.84 | 18.2 | 7 | 2 |

*TE represents Test Example, and CE represents Comparative Example.

As a result, it was found that a dry powder that can prevent fading of the green color for a long period of time to retain the color tone can be prepared by, in the dry powder containing an edible part and an inedible part of immature pulses, adjusting the proportion of the inedible part to the edible part constituting the dry powder and the moisture content to certain ranges, adjusting the brightness, chroma, and hue in the Munsell color system within certain ranges, and adjusting the characteristics of the particles in the dry powder (specific surface area per unit volume before ultrasonication, standard deviation of the particle size distribution before ultrasonication, and number average diameter after ultrasonication) within certain ranges.

In addition, although not shown in the Table, the same results as in the dry powder were verified in the sticks produced as examples of food/drink containing the dry powder.

Industrial Applicability

A dry powder and a food/drink containing it of the present invention can be easily and widely used in the food field and have extremely high usefulness.

**Claims**

1.  A dry powder comprising an edible part and an inedible part of immature pulses and satisfying following requirements (1) to (8):

    (1) a proportion of the inedible part to the edible part of immature pulses is from 1 mass% to 200 mass% by dry mass;
    (2) a water content is 20 mass% or less;
    (3) brightness in a Munsell color system is 7 or more;
    (4) chroma in a Munsell color system is 3 or more;
    (5) hue in a Munsell color system is from 5Y to 10Y or from 0GY to 10GY;
    (6) a specific surface area per unit volume of dry powder particles before ultrasonication is 0.05 $m^2$/mL or more as measured with a laser diffraction particle size analyzer using ethanol as a solvent;
    (7) a standard deviation of particle size distribution of dry powder particles before ultrasonication is 200 $\mu$m or less as measured with a laser diffraction particle size analyzer using ethanol as a solvent; and
    (8) a number average diameter of dry powder particles after ultrasonication is less than 30 $\mu$m as measured with a laser diffraction particle size analyzer using ethanol as a solvent.

2.  The dry powder according to Claim 1, comprising insoluble dietary fibers in an amount of 3 mass% or more by dry mass.

3.  The dry powder according to Claim 1 or 2, comprising the immature pulses in an amount of 20 mass% or more by dry mass.

4.  The dry powder according to any one of Claims 1 to 3, wherein the immature pulses are one or more selected from the group consisting of Pisum, Phaseolus, Glycine, and Vicia.

5.  The dry powder according to any one of Claims 1 to 4, which is free of a colorant.

6.  A food/drink comprising the dry powder according to any one of Claims 1 to 5.

7.  A method for producing the dry powder according to any one of Claims 1 to 5, the method comprising crushing dry immature pulses that meet the conditions (1) to (5) of Claim 1 until the conditions (6) to (8) of Claim 1 are met.

Figure 1

**INTERNATIONAL SEARCH REPORT**

| International application No. |
|---|
| PCT/JP2020/030827 |

| A. CLASSIFICATION OF SUBJECT MATTER |
|---|
| Int.Cl. A23L11/00(2021.01)i, A23L33/22(2016.01)i<br>FI: A23L11/00F, A23L11/00A, A23L33/22<br><br>According to International Patent Classification (IPC) or to both national classification and IPC |

| B. FIELDS SEARCHED |
|---|
| Minimum documentation searched (classification system followed by classification symbols)<br>Int.Cl. A23L11/00, A23L33/22 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
JSTPlus/JMEDPlus/JST7580(JDreamIII),
FSTA/CAplus/WPIDS/AGRICOLA/BIOSIS/MEDLINE/EMBASE(STN), 日経テレコン(Nikkei Telecom)

| C. DOCUMENTS CONSIDERED TO BE RELEVANT | | |
|---|---|---|
| Category* | Citation of document, with indication, where appropriate, of the relevant passages | Relevant to claim No. |
| X | JP 6582304 B1 (MIZKAN HOLDINGS CO., LTD.) 02.10.2019 (2019-10-02), claims, examples (test example 32) | 1-7 |
| A | 「ZENB initiative」の取り組みから新ブランド「ZENB」誕生－3月5日（火）、EC サイトをオープンし、新商品販売開始！－, MIZKAN NEWSRELEASE R18036, pp. 1, 2, 2019.02.28 (online), retrieved on 06 October 2020, retrieved from the internet: <http:www.mizkan.co.jp/company/newsrelease/2018news/pdf/R18036.pdf>, text, non-official translation (New brand "ZENB" is born from an activity of "ZENB initiative" -On March 5th (Tuesday), the EC site will open and new products will be on sale!-) | 1-7 |

☐ Further documents are listed in the continuation of Box C.     ☒ See patent family annex.

| * | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06.10.2020 | 20.10.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT<br>Information on patent family members | International application No.<br>PCT/JP2020/030827 |
|---|---|

| | | |
|---|---|---|
| JP 6582304 B1 | 02.10.2019 | US 2020/0187543 A1<br>claims, examples (test example 32)<br>WO 2019/193780 A1<br>EP 3639679 A1 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI6217732 A

- JP 2011239761 A

**Non-patent literature cited in the description**

- the Standard Tables of Food Composition in Japan. 2015
- Food composition tables. Ministry of Health, Labor and Welfare, 236

- Standard Tables of Food Composition in Japan. 2015